(19) Europäisches Patentamt
European Patent Office
Office européen des brevets

(11) Veröffentlichungsnummer: **0 464 543 B1**

(12) **EUROPÄISCHE PATENTSCHRIFT**

(45) Veröffentlichungstag der Patentschrift: **31.08.94**

(51) Int. Cl.⁵: **C09B 23/08**, G11B 7/24

(21) Anmeldenummer: **91110348.9**

(22) Anmeldetag: **22.06.91**

(54) **Polymethinfarbstoffe.**

(30) Priorität: **03.07.90 DE 4021078**

(43) Veröffentlichungstag der Anmeldung:
**08.01.92 Patentblatt 92/02**

(45) Bekanntmachung des Hinweises auf die Patenterteilung:
**31.08.94 Patentblatt 94/35**

(84) Benannte Vertragsstaaten:
**CH DE FR GB IT LI**

(56) Entgegenhaltungen:
**EP-A- 0 251 282**
**US-A- 4 908 294**

(73) Patentinhaber: **BASF Aktiengesellschaft**
**Carl-Bosch-Strasse 38**
**D-67063 Ludwigshafen (DE)**

(72) Erfinder: **Acker, Michael, Dr.**
**Glockenzehnten 45**
**W 6900 Heidelberg (DE)**
Erfinder: **Neumann, Peter, Dr.**
**Poststrasse 28**
**W-6800 Mannheim 31 (DE)**
Erfinder: **Albert, Bernhard, Dr.**
**Rietburgstrasse 13**
**W-6701 Maxdorf (DE)**
Erfinder: **Brosius, Sibylle, Dr.**
**Cordovastrasse 29**
**W-6700 Ludwigshafen (DE)**
Erfinder: **Schomann, Klaus Dieter, Dr.**
**Kopernikusstrasse 47**
**W-6700 Ludwigshafen (DE)**
Erfinder: **Kuppelmaier, Harald, Dr.**
**In den Bannzaeunen 17**
**W-6701 Goenheim (DE)**

EP 0 464 543 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Polymethinfarbstoffe der allgemeinen Formel I

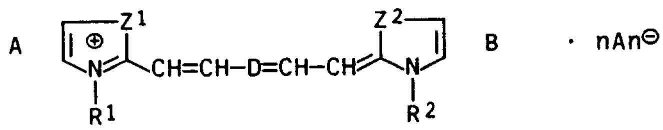 I

in welcher die Variablen folgende Bedeutung haben:

- A den Rest eines an den Heterocyclus anellierten Benzol- oder Naphthalinkerns, der bis zu drei der folgenden Substituenten tragen kann: $C_1$-$C_{12}$-Alkylgruppen, deren C-Kette durch Sauerstoffatome in Etherfunktion unterbrochen sein kann, $C_1$-$C_{12}$-Alkoxy, Phenyl, Phenoxy, Phenylthio, Cyano, Amino, Mono-($C_1$-$C_{12}$-alkyl)amino, Di-($C_1$-$C_{12}$-alkyl)amino, Hydroxy oder Halogen;
- B einen der Reste A;
- $Z^1$, $Z^2$ -NH-; -O-; -S-; -$C(CH_3)_2$- oder -CH = CH-;
- D -$CX^2$ = ; -CH = $CX^2$-CH = ;

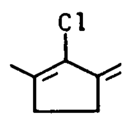 oder 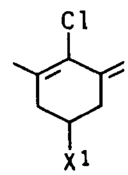

wobei $X^1$ Wasserstoff oder $C_1$-$C_6$-Alkyl und $X^2$ Chlor, Brom oder einen der Reste $X^1$ bedeuten;
- $R^1$ eine Gruppe

$-(CH_2)_m-Y^{\oplus}(R^3)_3$

wobei die Variablen folgende Bedeutungen haben:
- m 1 bis 10;
- Y Stickstoff oder Phosphor;
- $R^3$ gleiche oder verschiedene der folgenden Reste: Phenyl- oder $C_5$-$C_7$-Cycloalkylgruppen, die jeweils bis zu drei der folgenden Substituenten tragen können: $C_1$-$C_4$-Alkyl, $C_1$-$C_4$-Alkoxy oder Halogen; $C_1$-$C_{22}$-Alkylgruppen, deren C-Kette durch Sauerstoffatome in Etherfunktion unterbrochen sein kann und die bis zu drei der folgenden Substituenten tragen können: Carboxy, $C_1$-$C_4$-Alkanoyl, $C_1$-$C_4$-Alkoxycarbonyl, $C_1$-$C_4$-Alkanoylamino, $C_1$-$C_4$-Alkoxycarbonylamino, Acryloyloxy, Methacryloyloxy, Phenyl, Amino, Cyano, Hydroxy oder Halogen;
- $R^2$ einen der Reste $R^1$ oder eine der definitionsgemäßen Alkylgruppen oder substituierten Alkylgruppen $R^3$;
- $An^{\ominus}$ das Äquivalent eines Säureanions;
- n den Wert 2 oder, falls $R^2$ einen der Reste $R^1$ bedeutet, den Wert 3

sowie optische Aufzeichnungsmedien, welche die Farbstoffe I enthalten.

Aufzeichnungsmedien, die durch energiereiche Bestrahlung eine lokal begrenzte Zustandsänderung erfahren, sind bekannt. Mit dieser thermisch ausgelösten Zustandsänderung, z.B. Verdampfen, Änderung des Fließverhaltens oder Ausbleichen, ist eine Änderung der optischen Eigenschaften, beispielsweise der Absorption durch Verschiebung des Absorptionsmaximums oder der Extinktion verbunden, die zur Informations- oder Datenaufzeichnung ausgenutzt werden kann.

Als Lichtquellen zur optischen Aufzeichnung eignen sich u.a. Halbleiterlaser, die Licht im nahen Infrarot emittieren. Besonders zu nennen sind hierbei Festkörper-Injektionslaser, vor allem der AlGaAs-Laser, der im Wellenlängenbereich von etwa 700 bis 900 nm emittiert.

Die Verwendung dieses Lasers ist aufgrund der geringen Größe des Bauelements, seines geringen Energiebedarfs und der Möglichkeit der direkten Modulation der optischen Ausgangsleistung durch Modulation des elektrischen Antriebsstromes besonders vorteilhaft.

An die verwendeten Aufzeichnungsmedien sind folgende Anforderungen zu stellen: Die in den Medien enthaltenen Farbstoffe sollen im gewünschten Wellenlängenbereich hohe Absorption aufweisen, sie sollen

technisch leicht zugänglich und gegen äußere Einflüsse stabil sein und sich in Alkoholen und Polymeren leicht lösen, so daß sie zu dünnen, homogenen Farbstoffschichten hoher Grundreflektivität verarbeitet werden können, die gut auf den gebräuchlichen Trägermaterialien haften. Die Aufzeichnungsmedien sollen zudem mittels eines Halbleiterlasers beschreibbar und anschließend gut lesbar sein und sich durch ein möglichst hohes Signal/Rausch-Verhältnis auszeichnen.

Für die optische Aufzeichnung geeignete Farbstoffe sind bekanntermaßen u.a. solche auf Methinbasis. Handelt es sich dabei um Polymethinfarbstoffe mit kationischen Substituenten an den Endgruppen, so wurden bislang, wie z.B. in der DE-C-22 36 956, US-A-2 256 163 und J. Heterocyclic Chem. 22, 1727-1734 (1985) beschrieben, Trimethinfarbstoffe verwendet. Diese Verbindungen weisen aber u.a. den Nachteil auf, daß sie bei kürzeren Wellenlängen absorbieren als die kommerziellen Halbleiterlaser emittieren.

Der Erfindung lag daher die Aufgabe zugrunde, für optische Aufzeichnungsmedien geeignete Farbstoffe zu finden, die dem geforderten Eigenschaftsprofil näherkommen als die bisher bekannten Farbstoffe und die im Wellenlängenbereich der bevorzugten Halbleiterlaser absorbieren.

Demgemäß wurden die eingangs definierten Polymethinfarbstoffe I gefunden.

Weiterhin wurden optische Aufzeichnungsmedien für die Aufzeichnung und Wiedergabe von Informationen mittels Laserstrahlen gefunden, welche diese Farbstoffe in der gegen Laserlicht empfindlichen Schicht enthalten.

Bevorzugte Ausgestaltungen der Erfindung sind den Unteransprüchen zu entnehmen.

Die Gruppierungen A und B sind vorzugsweise gleich. Außerdem werden die unsubstituierten Reste dieser Art bevorzugt, vor allem derjenige, welcher einem anellierten Benzolkern entspricht.

Handelt es sich um substituierte Reste A oder B, so kommen als Substituenten in Betracht:

- $C_1$-$C_{12}$-Alkylgruppen wie Heptyl, Octyl, 2-Ethylhexyl, Nonyl, Decyl, Undecyl, Dodecyl sowie verzweigte Reste dieser Art und vor allem $C_1$-$C_6$-Alkylgruppen wie Methyl, Ethyl, Propyl, Isopropyl, Butyl, Isobutyl, sec.-Butyl, tert.-Butyl, Pentyl, Isopentyl, Neopentyl, tert.-Pentyl, Hexyl und 2-Methylpentyl;
- $C_1$-$C_{12}$-Alkylgruppen, deren C-Kette durch Sauerstoffatome in Etherfunktion unterbrochen ist, wie 2-Methoxy-, 2-Ethoxy-, 2-Propoxy-, 2-Isopropoxy- und 2-Butoxyethyl, 2- und 3-Methoxypropyl, 2- und 3-Ethoxypropyl, 2- und 4-Ethoxybutyl, 2- und 4-Isopropoxybutyl, 5-Ethoxypentyl, 6-Methoxyhexyl, 4-Oxa-6-ethyldecyl, 3,6-Dioxaheptyl, 3,6-Dioxaoctyl, 3,6-Dioxadecyl, 3,6,9-Trioxadecyl und 3,6,9-Trioxaundecyl;
- $C_1$-$C_{12}$-Alkoxygruppen wie Heptyloxy, Octyloxy, 2-Ethylhexyloxy, Nonyloxy, Decyloxy, Undecyloxy, Dodecyloxy und vor allem $C_1$-$C_6$-Alkoxygruppen wie Methoxy, Ethoxy, Propoxy, Isopropoxy, Butoxy, Isobutoxy, sec.-Butoxy, Pentyloxy, Isopentyloxy, Neopentyloxy und Hexyloxy;
- Mono- und Di-($C_1$-$C_{12}$-alkyl)aminogruppen wie Pentyl-, Hexyl-, Heptyl- und 2-Ethylhexylamino sowie Dipentyl- und Dihexylamino und vor allem Mono- und Di-($C_1$-$C_4$-alkyl)aminogruppen wie Methyl-, Ethyl-, Propyl-, Isopropyl- und Butylamino sowie Dimethyl-, Methylethyl-, Diethyl- und Diisopropylamino;
- Phenoxy, Phenylthio und vor allem Phenyl;
- Cyano, Hydroxy, Halogen wie Fluor, vor allem Chlor und Brom und besonders Amino.

Von den Gruppierungen $Z^1$ oder $Z^2$ werden -NH- und besonders -S-, $-C(CH_3)_2-$ und -CH=CH- bevorzugt.

Geeignete Reste D sind $-CX^2=$, $-CH=CX^2-CH=$ und

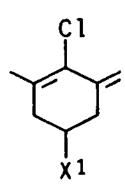

wobei $X^1$ Wasserstoff oder $C_1$-$C_6$-Alkyl wie Methyl, Ethyl, Propyl, Isopropyl, Butyl, Isobutyl, sec.-Butyl, tert.-Butyl, Pentyl, Isopentyl, Neopentyl, tert.-Pentyl, Hexyl und 2-Methylpentyl bedeutet und $X^2$ zusätzlich noch für Chlor oder Brom stehen kann. Als besonders bevorzugte Reste D sind hier zu nennen:

-CH=, -CCl=, -CBr=, $-C(CH_3)=$, -CH=CH-CH=,

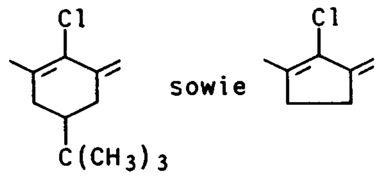

Von den Gruppierungen $R^1$ der Formel $-(CH_2)_m-Y^{\oplus}(R^3)_3$ sind diejenigen bevorzugt, in denen m für 1 bis 10 steht, und diejenigen besonders bevorzugt, in denen m für 1 bis 6 steht. Y bedeutet dabei vorzugsweise Stickstoff.

Handelt es sich bei den Resten $R^3$ um Alkylgruppen, so sind von den bereits als Substituenten der Gruppierungen A oder B aufgeführten Alkylgruppen besonders solche mit bis zu 6 C-Atomen bevorzugt.

Weiterhin eignen sich als Reste $R^3$ beispielsweise die folgenden Alkylgruppen: Tridecyl, Tetradecyl, Pentadecyl, Hexadecyl, Heptadecyl, Octadecyl, Nonadecyl, Eicosyl, Heneicosyl und Docosyl sowie verzweigte Reste dieser Art.

Wird die C-Kette der Alkylgruppen durch Sauerstoffatome in Etherfunktion unterbrochen, so erhöht sich die Zahl der Kettenglieder um die Anzahl dieser Sauerstoffatome. $C_1$-$C_6$-Alkylgruppen enthalten dabei bevorzugt ein oder zwei, $C_7$-$C_{12}$-Alkylgruppen bis zu drei und $C_{13}$-$C_{22}$-Alkylgruppen bis zu fünf Sauerstoffatome in der Kette. Beispiele für diese Gruppierungen sind die bereits als Substituenten an A oder B genannten Reste.

Die Alkylgruppen $R^3$ können bis zu drei, vorzugsweise bis zu zwei Substituenten tragen. Als Beispiele für substituierte Alkylgruppen seien die folgenden Reste genannt:

- bevorzugt Carboxyalkyl wie vor allem Carboxymethyl und 2-Carboxyethyl sowie daneben 3-Carboxypropyl, 4-Carboxybutyl und 5-Carboxypentyl;
- $C_1$-$C_4$-Alkanoylalkyl wie Propan-2-on-1-yl, Butan-3-on-1-yl, Butan-3-on-2-yl und 2-Ethylpentan-3-on-1-yl;
- bevorzugt $C_1$-$C_4$-Alkoxycarbonylalkyl wie vor allem Ethoxycarbonylmethyl, 2-(Ethoxycarbonyl)ethyl und 2-(Octyloxycarbonyl)ethyl sowie daneben 2- und 3-(Methoxycarbonyl)propyl und 3-(Isopropoxycarbonyl)propyl;
- $C_1$-$C_4$-Alkanoylaminoalkyl wie Acetylaminomethyl, 2-(Acetylamino)ethyl, 2-(Propionylamino)ethyl und 2-(Butyrylamino)ethyl;
- $C_1$-$C_4$-Alkoxycarbonylaminoalkyl wie Ethoxycarbonylaminomethyl und 2-(Ethoxycarbonylamino)ethyl;
- besonders Acryloylalkyl und Methacryloyloxyalkyl wie 2-Acryloyloxyethyl, 2-Methacryloyloxyethyl, 2- und 3-Methacryloyloxypropyl, 2- und 4-Methacryloyloxybutyl;
- Phenylalkyl wie Benzyl und 1- und 2-Phenylethyl;
- bevorzugt Hydroxyalkyl wie vor allem 2-Hydroxyethyl sowie daneben 2- und 3-Hydroxypropyl, 2- und 4-Hydroxybutyl, 5-Hydroxypentyl, 6-Hydroxyhexyl, auch 7-Hydroxyheptyl und 8-Hydroxyoctyl;
- Halogenalkyl wie Fluor-, Difluor- und Trifluormethyl, 2-Fluor-, 1,1-Difluor- und 1,1,1-Trifluorethyl, Heptafluorpropyl, 5-Fluorpentyl, besonders Chlor- und Trichlormethyl, 2-Chlorethyl, 4-Chlorbutyl, 6-Chlorhexyl und vor allem Brommethyl, 2-Bromethyl und 4-Brombutyl;
- Cyanoalkyl wie Cyanomethyl, 2-Cyanoethyl, 3-Cyanopropyl, 4-Cyanobutyl, 5-Cyanopentyl und 6-Cyanohexyl;
- Aminoalkyl wie 2-Aminoethyl, 2- und 3-Aminopropyl, 2- und 4-Aminobutyl, 5-Aminopentyl und 6-Aminohexyl.

Als Reste $R^3$ kommen weiterhin Cyclopentyl, Cyclohexyl und Cycloheptyl sowie besonders Phenyl in Betracht, die vorzugsweise unsubstituiert sind, aber auch bis zu drei Substituenten wie die bereits genannten $C_1$-$C_4$-Alkyl- und $C_1$-$C_4$-Alkoxygruppen und Halogen wie Fluor, bevorzugt Chlor und Brom tragen können. Beispiele für substituierte Reste dieser Gruppe sind 4-Methyl-, 4-Methoxy-, 4-Chlor- und 4-Bromphenyl und 3-Methylcyclopentyl, 4-Methyl-, 4-Ethyl- und 2,3-Dichlorcyclohexyl.

Als bevorzugte Gruppierungen $R^1$ sind zu nennen (dabei bedeutet Ph = Phenyl, Me = Methyl und Et = Ethyl): $-(CH_2)_4-N^{\oplus}Et_3$, $-(CH_2)_3-N^{\oplus}Me_3$, $-(CH_2)_3-N^{\oplus}(C_4H_9)_3$, $-(CH_2)_3-N^{\oplus}Ph_3$ und $-(CH_2)_3-P^{\oplus}Me_3$. Besonders bevorzugt sind z.B. $-(CH_2)_3-N^{\oplus}Et_3$, $-(CH_2)_6-N^{\oplus}Et_3$, $-(CH_2)_{10}-N^{\oplus}Et_3$, $-(CH_2)_3-P^{\oplus}Et_3$ und $-(CH_2)_3-P^{\oplus}Ph_3$.

Der Rest $R^2$ bedeutet eine der bereits genannten Gruppen $R^1$ oder eine der Alkylgruppen oder substituierten Alkylgruppen $R^3$.

Geeignete Anionen $An^{\ominus}$ können Anionen organischer oder anorganischer Säuren sein. Besonders bevorzugt sind dabei z.B. Methylsulfonat, 4-Methylphenylsulfonat, Acetat, Trifluoroacetat und Heptafluorobutyrat und Chlorid, Bromid, Iodid, Perchlorat, Tetrafluoroborat sowie daneben Hexafluorophosphat und

Tetraphenylborat.

Weiterhin können als anorganische Anionen auch die Anionen von Heteropolysäuren, z.B. des Phosphors oder des Siliciums, eingesetzt werden. Als Beispiele seien genannt: Molybdatophosphorsäure, Molybdatokieselsäure, Vanadatophosphorsäure, Vanadatokieselsäure, Wolframatophosphorsäure, Wolframatokieselsäure sowie Mischsäuren dieser Art.

Bekanntermaßen erfolgt die Herstellung dieser Heteropolysäuren oder ihrer Salze durch Ansäuern von Lösungen der Alkali- oder Ammoniummolybdate, -vanadate und/oder -wolframate in Gegenwart von wasserlöslichen Phosphaten und/oder Silicaten.

Bevorzugte Polymethinfarbstoffe I sind den Beispielen zu entnehmen.

Methoden zur Herstellung von Penta- und Heptamethinen sind allgemein bekannt und beispielsweise in Houben-Weyl, 4. Aufl., Band V/1d, S. 268 bis 273 (1972) beschrieben.

Die erfindungsgemäßen Polymethinfarbstoffe I können analog dargestellt werden, beispielsweise durch Kondensation einer Verbindung der Formel II

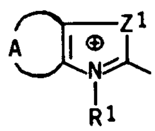 · $An^{\ominus}$ II

mit einer der Verbindungen der Formeln IIIa - IIIe

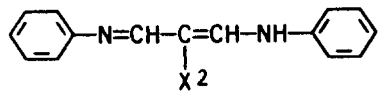 · HCl oder HBr IIIa

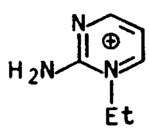 · $I^{\ominus}$ IIIb

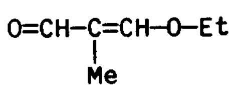 IIIc

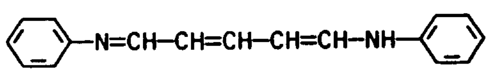 · HCl IIId

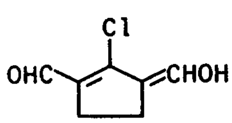 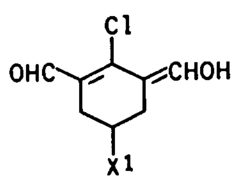 IIIe

die den Rest D in Form folgender Gruppierungen enthalten: IIIa: $-CX^2=$; IIIb: $-CH=$; IIIc: $-C(CH_3)=$; IIId: $-CH=CH-CH=$;

IIIe: 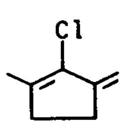 , 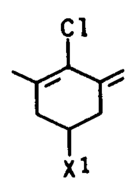

Die Umsetzung wird zweckmäßigerweise in einem Lösungsmittel wie Methanol, Propanol, Butanol und Eisessig, bevorzugt Acetanhydrid und Ethanol, oder in Gemischen der genannten Lösungsmittel, vorzugsweise unter Zusatz einer Base wie Triethylamin, Pyridin, Piperidin oder Natriumacetat als Katalysator bei Temperaturen von 40 bis 140 °C, besonders 80 bis 120 °C durchgeführt.

Wird ein quartäres Salz der Formel II im Molverhältnis 2:1 mit einem der C-3- oder C-5-Bausteine der Formeln III umgesetzt, so erhält man symmetrische trikationische Penta- oder Heptamethinfarbstoffe 1 (A = B und $Z^1 = Z^2$ und $R^1 = R^2$).

Unsymmetrische di- oder trikationische Polymethinfarbstoffe I (A≠B und/oder $Z^1 \neq Z^2$ und/oder $R^1 \neq R^2$) sind z.B. durch Umsetzung einer Verbindung II mit einer Verbindung IIIa oder d im Molverhältnis 1:1 in Acetanhydrid und 1:1-Folgeumsetzung des Kondensationsproduktes, eines Hemicyanins der Formel IVa oder IVd

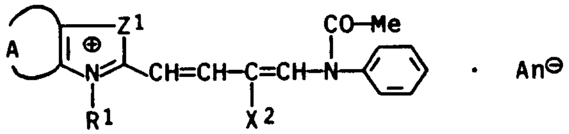

IVa

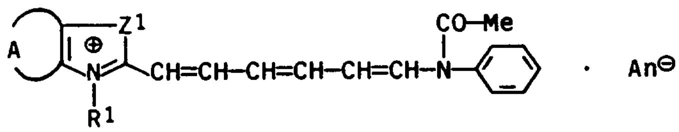

IVd

mit einer Verbindung der Formel IIa

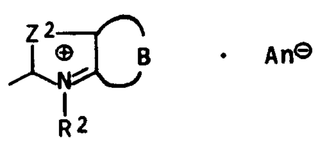

IIa

oder durch Umsetzung einer Verbindung IIa mit einer Verbindung IIIa oder d zum entsprechenden Hemicyanin und dessen Folgeumsetzung mit einer Verbindung II zugänglich.

Die als Ausgangsstoffe für die Synthese benötigten quartären Salze II können, wie beispielsweise aus J. Heterocyclic Chem. 22, 1727-34 (1985) bekannt, durch Reaktion einer Verbindung der Formel V

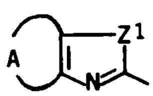

V

mit einer Verbindung der Formel VI

$Hal\text{-}(CH_2)_m\text{-}Y^{\oplus}(R^3)_3$ VI

in der Hal für Chlor oder Brom steht, hergestellt werden.

Die quartären Salze IIa sind bekanntermaßen durch Umsetzung einer Verbindung der Formel Va

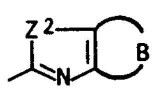

Va

mit einer Verbindung der Formel VII

$Hal'\text{-}R^2$ VII

in der Hal' Chlor, Brom oder Iod bedeutet, erhältlich.

Die erfindungsgemäßen Polymethinfarbstoffe I weisen hohe Absorption im Wellenlängenbereich von 655 bis 820 nm auf. Außerdem sind sie in organischen Lösungsmitteln, insbesondere Alkoholen, und thermoplastischen oder vernetzbaren Bindemitteln, wie sie für die Herstellung von optischen Aufzeichnungsmedien eingesetzt werden, sehr gut löslich.

Die erfindungsgemäßen optischen Aufzeichnungsmedien weisen den allgemein bekannten Aufbau auf, der z.B. in J. Vac. Sci. Technol. 18, 105-109 (1981) beschrieben ist.

Als Träger werden beispielsweise Platten oder Scheiben aus Glas oder Kunststoff, insbesondere aus Polymethylmethacrylat, Polystyrol, Polystyrolcopolymeren, Polyvinylchlorid, Polymethylpenten und Polycarbonat eingesetzt, die mit Spurrillen versehen sein können.

Der Träger kann dabei die Form eines Bandes, einer quadratischen oder rechteckigen Platte oder vorzugsweise einer runden Scheibe haben, wobei die für laseroptische Aufzeichnungsmaterialien üblichen Scheiben vorzugsweise einen Durchmesser von 10 oder 13 cm aufweisen.

Die Mitverwendung von Bindemitteln in der den Farbstoff enthaltenden, gegen Laserstrahlen empfindlichen Schicht ist nicht unbedingt erforderlich, wird aber dennoch bevorzugt. Geeignete Bindemittel sind z.B. Siliconharze, Epoxidharze, Acrylatharze, Polystyrolhomo- und -copolymerisate, Polyvinylcarbazol, Polyvinylpyrrolidon, Polyvinylestercopolymere, Polyvinylidenchloridcopolymere und Polyvinylchlorid.

Zwischen der lichtabsorbierenden Schicht und dem Träger kann eine reflektierende Schicht vorhanden sein, die so dick sein sollte, daß das zur Aufnahme oder zum Abtasten eingestrahlte und durch die farbige Schicht gewanderte Licht möglichst vollständig reflektiert wird und so wieder durch die absorbierende Schicht geleitet werden kann.

Geeignete lichtreflektierende Materialien sind z.B. Metalle wie Aluminium, Zinn, Blei, Wismut, Rhodium, Kupfer und Gold, die bekanntermaßen durch Aufdampfen im Vakuum oder in Form von Folien auf den Träger aufgebracht werden können, oder dielektrische Spiegel mit geringer Wärmeleitfähigkeit.

Sowohl der Träger als auch die lichtreflektierende Schicht müssen eine optisch glatte, ebene Oberfläche aufweisen, an der die absorbierende Schicht fest haftet. Aus diesem Grund empfiehlt es sich, Träger und/oder Reflektor mit einer Glättungsschicht aus einem lichtdurchlässigen Kunststoff zu versehen.

Die lichtabsorbierende Schicht wird durch Aufschleudern einer Lösung eines erfindungsgemäßen Polymethinfarbstoffs I, die zusätzlich ein Bindemittel und weitere Additive wie Antioxidantien, Singulett-Sauerstoff-Quencher und UV-Absorber enthalten kann, auf den Träger aufgebracht und getrocknet.

Als geeignete Lösungsmittel sind z.B. 1,1,2-Trichlorethan, Methylethylketon, Diacetonalkohol, Toluol, Methanol, Ethanol, Propanol und deren Gemische zu nennen.

Es ist weiterhin auch möglich, die absorbierende Schicht zusätzlich mit einer transparenten Schutzschicht, insbesondere aus fluorierten Polymeren zu versehen, die durch Aufschleudern, Aufrakeln, Aufdampfen im Vakuum oder Eintauchen in die Polymer-Lösung aufgebracht werden kann und deren Schichtdicke so zu wählen ist, daß keine störenden Interferenzen auftreten können.

Bei ausreichender Qualität des Aufzeichnungsmediums sowie bei "sandwich"-artigem Aufbau ist eine Schutzschicht i.a. entbehrlich. Der sandwichartige Aufbau bietet neben größerer mechanischer Stablität auch doppelte Speicherkapazität.

Die erfindungsgemäßen optischen Aufzeichnungsmedien weisen bei der Wellenlänge der kommerziell verwendeten Halbleiterlaser (ca. 700 bis 900 nm) hohe Absorption auf. Die den Farbstoff I enthaltende Schicht kann so auf eine lichtreflektierende Schicht aufgebracht werden, daß sich glatte, homogene Absorptionsschichten hoher optischer Qualität mit günstiger Schwellenenergie ergeben und in welche die zu speichernde Information mit einem Halbleiterlaser in Form von Pits eingeschrieben werden kann, wodurch ein ausgezeichnetes Signal/Rausch-Verhältnis resultiert. Weiterhin sind die erfindungsgemäßen optischen Aufzeichnungsmedien gegenüber atmosphärischen Einflüssen und Tageslicht sehr stabil.

Beispiele

a) Herstellung von Polymethinfarbstoffen I

a1) Herstellung von symmetrischen Polymethinfarbstoffen Ia

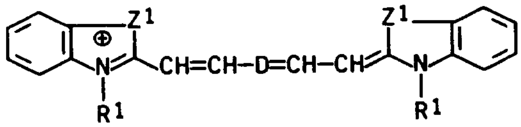 · $3An^{\ominus}$ Ia

Beispiel 1

Eine Mischung aus 3,2 g (20 mmol) der Verbindung

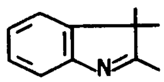

und 6,1 g (20 mmol) 3-Brompropyl-triethylammoniumbromid wurde 3 h bei 160 °C gerührt und danach bei 25 °C mit 50 ml Acetanhydrid und 2,8 g (10 mmol) der Verbindung

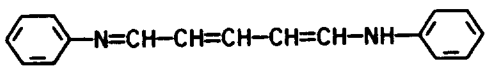 · HCl

versetzt. Das Gemisch wurde auf 40 °C erwärmt, wonach 4,0 g (40 mmol) Triethylamin zugegeben wurden. Anschließend wurde es noch für 10 min auf 100 °C erhitzt.

Nach dem Abkühlen wurde dieses Gemisch in 500 ml Tetrahydrofuran (THF) gegeben, wobei sich der Farbstoff Ia abschied. Er wurde abgetrennt und durch Extraktion nach Soxhlett mit THF von Begleitstoffen befreit.

Es wurden 5,9 g des Farbstoffs

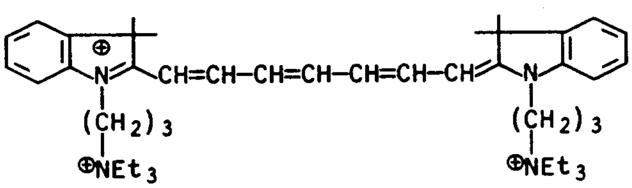 · $3\ Br^{\ominus}$

erhalten, was einer Ausbeute von 64 % entspricht.

Beispiele 2 bis 15

Auf analoge Weise zu Beispiel 1 wurden diese Farbstoffe Ia durch Umsetzung einer Verbindung

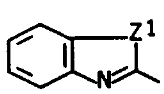

mit einer dem Rest $R^1$ entsprechenden Verbindung

$Hal\text{-}(CH_2)_m\text{-}Y^{\oplus}(R^3)_3$

und der die Gruppierung D einführenden Verbindung

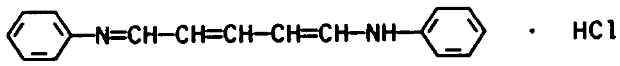

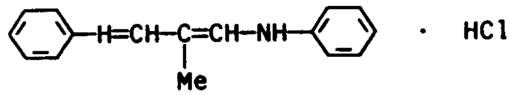

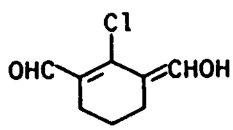 oder 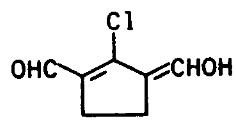

in ähnlichen Ausbeuten hergestellt.

Tabelle 1 sind die jeweiligen Farbstoffe Ia und ihre in Methanol, Ethanol oder Methylenchlorid gemessenen Absorptionsmaxima $\lambda_{max}$ [nm] aufgeführt.

Tabelle 1

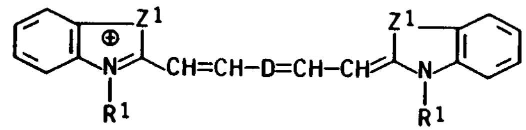 $\cdot\ 3An^{\ominus}$ Ia

| Bsp. | $Z^1$ | $R^1$ | D | $An^{\ominus}$ | $\lambda_{max}$ [nm] |
|---|---|---|---|---|---|
| 1 | $-CMe_2-$ | $-(CH_2)_3-N^{\oplus}Et_3$ | $-CH=CH-CH=$ | $Br^{\ominus}$ | 747 (EtOH) |
| 2 | $-S-$ | $-(CH_2)_3-N^{\oplus}Et_3$ | $-CMe=$ | $Br^{\ominus}$ | 655 (EtOH) |
| 3 | $-S-$ | $-(CH_2)_3-N^{\oplus}Et_3$ | 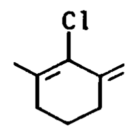 | $Br^{\ominus}$ | 807 (EtOH) |
| 4 | $-S-$ | $-(CH_2)_3-N^{\oplus}Et_3$ | $-CH=CH-CH=$ | $Br^{\ominus}$ | 761 (MeOH) |
| 5 | $-S-$ | $-(CH_2)_{10}-N^{\oplus}Et_3$ | $-CH=CH-CH=$ | $Br^{\ominus}$ | 761 (MeOH) |
| 6 | $-S-$ | $-(CH_2)_6-N^{\oplus}Et_3$ | $-CH=CH-CH=$ | $Br^{\ominus}$ | 767 (EtOH) |
| 7 | $-S-$ | $-(CH_2)_3-N^{\oplus}Et_3$ | $-CH=CH-CH=$ | $CF_3-(CF_2)_2-CO-O^{\ominus}$ | 778 ($CH_2Cl_2$) |
| 8 | $-CMe_2-$ | $-(CH_2)_3-N^{\oplus}Et_3$ | $-CH=CH-CH=$ | $CF_3-(CF_2)_2-CO-O^{\ominus}$ | 766 (EtOH) |
| 9 | $-CH=CH-$ | $-(CH_2)_3-N^{\oplus}Et_3$ | $-CH=CH-CH=$ | $Br^{\ominus}$ | 821 (EtOH) |
| 10 | $-CMe_2-$ | $-(CH_2)_3-P^{\oplus}Ph_3$ | $-CH=CH-CH=$ | $Br^{\ominus}$ | 747 (EtOH) |
| 11 | $-S-$ | $-(CH_2)_3-P^{\oplus}Et_3$ | $-CH=CH-CH=$ | $Br^{\ominus}$ | 761 (MeOH) |
| 12 | $-S-$ | $-(CH_2)_{10}-N^{\oplus}Et_3$ | 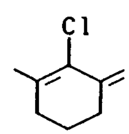 | $Br^{\ominus}$ | 799 (MeOH) |

Tabelle 1 (Fortsetzung)

| Bsp. | Z1 | R1 | D | An$^{\ominus}$ | $\lambda_{max}$ [nm] |
|---|---|---|---|---|---|
| 13 | -S- | $-(CH_2)_3-N^{\oplus}Et_3$ | 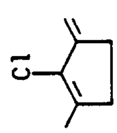 | $Br^{\ominus}$ | 822 (MeOH) |
| 14 | -S- | $-(CH_2)_3-N^{\oplus}Et_3$ | 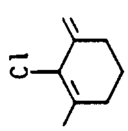 | $Br^{\ominus}$ | 798 (MeOH) |
| 15 | $-CMe_2-$ | $-(CH_2)_3-N^{\oplus}Et_3$ | 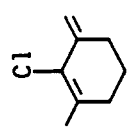 | $Br^{\ominus}$ | 784 (EtOH) |

a2) Herstellung von unsymmetrischen Polymethinfarbstoffen Ib

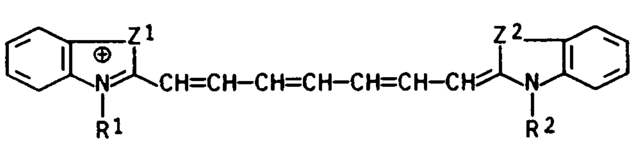

· $2Br^{\ominus}$ Ib

Beispiel 16

Stufe 1: Herstellung des Hemicyanins

Eine Mischung aus 1,6 g (10 mmol) der Verbindung

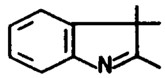

und 3,0 g (10 mmol) 3-Brompropyl-triethylammoniumbromid wurde 3 h bei 160 ° C gerührt und danach bei 25 ° C mit 15 ml Acetanhydrid und 3,4 g (12 mmol) der Verbindung

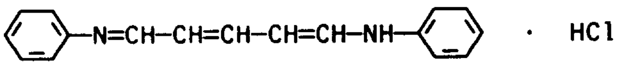

versetzt. Das Gemisch wurde 4 h bei 90 ° C gerührt.

Nach dem Abkühlen im Eisbad wurde dieses Gemisch in 800 ml THF gegeben, wobei sich das Hemicyanin

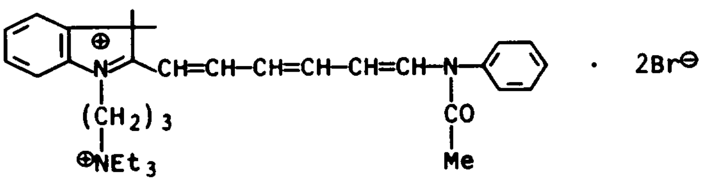

abschied. Es wurde abgetrennt, mit THF und Methyl-tert.-butylether gewaschen und durch Extraktion nach Soxhlett mit THF von Begleitstoffen befreit.

Es wurden 4,5 g des Hemicyanins erhalten, was einer Ausbeute von 68 % entspricht.

Stufe 2: Herstellung des Farbstoffs Ib

Eine Mischung aus 6,6 g (10 mmol) des Hemicyanins aus Stufe 1 und 4,1 g (10 mmol) der Verbindung

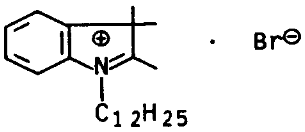

in 25 ml Ethanol wurde mit 2,0 g (20 mmol) Triethylamin versetzt und anschließend 10 min bei 100 ° C gerührt.

Nach dem Abkühlen wurde dieses Gemisch in 1 l THF gegeben, wobei sich der Farbstoff Ib abschied. Er wurde abgetrennt und durch Extraktion nach Soxhlett mit Methyl-tert.-butylether von Begleitstoffen befreit.

Es wurden 6,1 g des Farbstoffs

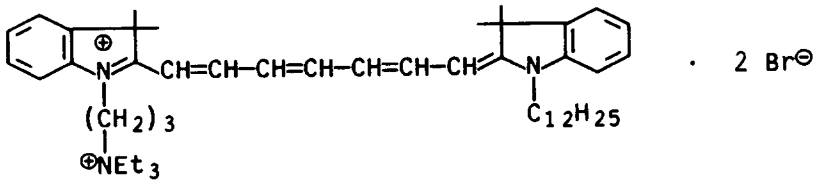

erhalten, was einer Ausbeute von 71 % entspricht.

Die Ergebnisse dieses Beispiels sind Tabelle 2 zu entnehmen.

Beispiele 17 bis 27

Auf analoge Weise zu Beispiel 16 wurden diese Farbstoffe Ib durch Umsetzung einer Verbindung

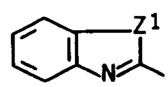

mit einer dem Rest $R^1$ entsprechenden Verbindung

$Hal\text{-}(CH_2)_3\text{-}Y^{\oplus}(R^3)_3$

und der die Gruppierung D einführenden Verbindung

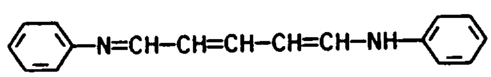

zum entsprechenden Hemicyanin und dessen Folgeumsetzung mit einer Verbindung

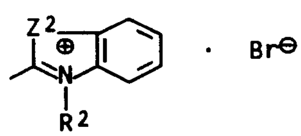

in ähnlichen Ausbeuten hergestellt.

In Tabelle 2 sind die jeweiligen Farbstoffe Ib und ihre in Methanol oder Ethanol gemessenen Absorptionsmaxima $\lambda_{max}$ [nm] aufgeführt.

Tabelle 2

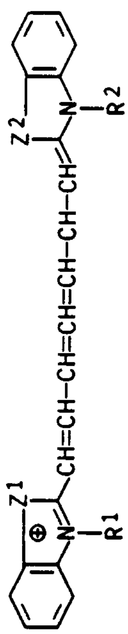

$\cdot\ 2Br^{\ominus}$ Ib

| Bsp. | Z1 | R1 | Z2 | R2 | $\lambda_{max}$ [nm] |
|---|---|---|---|---|---|
| 16 | $-CMe_2-$ | $-(CH_2)_3-N^{\oplus}Et_3$ | $-CMe_2-$ | $n-C_{12}H_{25}$ | 747 (EtOH) |
| 17 | $-S-$ | $-(CH_2)_3-N^{\oplus}Et_3$ | $-CMe_2-$ | $-CH_3$ | 753 (EtOH) |
| 18 | $-CMe_2-$ | $-(CH_2)_3-N^{\oplus}Et_3$ | $-CMe_2-$ | $-CH_3$ | 738 (MeOH) |
| 19 | $-S-$ | $-(CH_2)_3-N^{\oplus}Et_3$ | $-S-$ | $-C_2H_5$ | 758 (MeOH) |
| 20 | $-S-$ | $-(CH_2)_3-N^{\oplus}Et_3$ | $-S-$ | $-(CH_2)_2-OH$ | 760 (MeOH) |
| 21 | $-S-$ | $-(CH_2)_3-N^{\oplus}Et_3$ | $-CMe_2-$ | $n-C_{12}H_{25}$ | 753 (EtOH) |
| 22 | $-CMe_2-$ | $-(CH_2)_3-N^{\oplus}Et_3$ | $-S-$ | $-(CH_2)_2-CO-O-Et$ | 758 (MeOH) |
| 23 | $-S-$ | $-(CH_2)_3-N^{\oplus}Et_3$ | $-S-$ | $-(CH_2)_2-CO-O-C_8H_{17}$ | 768 (EtOH) |
| 24 | $-S-$ | $-(CH_2)_3-P^{\oplus}Et_3$ | $-CMe_2-$ | $-CH_3$ | 752 (EtOH) |
| 25 | $-CMe_2-$ | $-(CH_2)_3-N^{\oplus}Et_3$ | $-S-$ | $-(CH_2)_3-CO-O-CHMe_2$ | 743 (MeOH) |
| 26 | $-CMe_2-$ | $-(CH_2)_3-N^{\oplus}Et_3$ | $-S-$ | $-C_2H_5$ | 750 (MeOH) |
| 27 | $-S-$ | $-(CH_2)_3-N^{\oplus}Et_3$ | $-S-$ | $-C_2H_5$ | 789 (MeOH) |

b) Anwendungsbeispiel

0,12 g des Farbstoffs aus Beispiel 16 und 3,90 g Propanol wurden 1 h bei Raumtemperatur gerührt und anschließend filtriert. Die Lösung wurde bei 1800 Upm auf ein Polymethylmethacrylat-Substrat aufgeschleudert.

Die erhaltene Schicht war homogen und hochreflektierend. Sie ließ sich gut mit einem Halbleiterlaser ($\lambda_{max}$ = 830 nm) beschreiben. Die eingeschriebenen Informationen konnten mit gutem Kontrast wieder ausgelesen werden.

## Patentansprüche

**1.** Polymethinfarbstoffe der allgemeinen Formel I

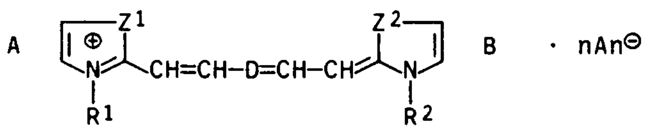

I

in welcher die Variablen folgende Bedeutung haben:

A den Rest eines an den Heterocyclus anellierten Benzol- oder Naphthalinkerns, der bis zu drei der folgenden Substituenten tragen kann: $C_1$-$C_{12}$-Alkylgruppen, deren C-Kette durch Sauerstoffatome in Etherfunktion unterbrochen sein kann, $C_1$-$C_{12}$-Alkoxy, Phenyl, Phenoxy, Phenylthio, Cyano, Amino, Mono($C_1$-$C_{12}$-alkyl)amino, Di-($C_1$-$C_{12}$-alkyl)amino, Hydroxy oder Halogen;

B einen der Reste A;

$Z^1$, $Z^2$ -NH-; -O-; -S-; -C($CH_3$)$_2$- oder -CH = CH-;

D -$CX^2$ = ; -CH = $CX^2$-CH = ;

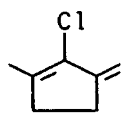

oder

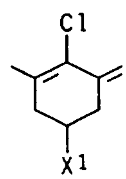

wobei $X^1$ Wasserstoff oder $C_1$-$C_6$-Alkyl und $X^2$ Chlor, Brom oder einen der Reste $X^1$ bedeuten;

$R^1$ eine Gruppe

$$-(CH_2)_m-Y^{\oplus}(R^3)_3$$

wobei die Variablen folgende Bedeutung haben:

m 1 bis 10;

Y Stickstoff oder Phosphor;

$R^3$ gleiche oder verschiedene der folgenden Reste: Phenyl- oder $C_5$-$C_7$-Cycloalkylgruppen, die jeweils bis zu drei der folgenden Substituenten tragen können: $C_1$-$C_4$-Alkyl, $C_1$-$C_4$-Alkoxy oder Halogen; $C_1$-$C_{22}$-Alkylgruppen, deren C-Kette durch Sauerstoffatome in Etherfunktion unterbrochen sein kann und die bis zu drei der folgenden Substituenten tragen können: Carboxy, $C_1$-$C_4$-Alkanoyl, $C_1$-$C_4$-Alkoxycarbonyl, $C_1$-$C_4$-Alkanoylamino, $C_1$-$C_4$-Alkoxycarbonylamino, Acryloyloxy, Methacryloyloxy, Phenyl, Amino, Cyano, Hydroxy oder Halogen;

$R^2$ einen der Reste $R^1$ oder eine der definitionsgemäßen Alkylgruppen oder substituierten Alkylgruppen $R^3$;

$An^{\ominus}$ das Äquivalent eines Säureanions;

n den Wert 2 oder, falls $R^2$ einen der Reste $R^1$ bedeutet, den Wert 3.

**2.** Polymethinfarbstoffe der allgemeinen Formel I nach Anspruch 1, in der die Variablen folgende Bedeutung haben:

A = B wobei diese Reste bis zu drei der folgenden Substituenten tragen können: $C_1$-$C_6$-Alkyl, Phenyl, Amino, Chlor oder Brom;

$Z^1$, $Z^2$ -NH-; -S-; -C($CH_3$)$_2$- oder -CH = CH-;

$R^1$ eine der definitionsgemäßen Gruppen, wobei

$R^3$ gleiche oder verschiedene der folgenden Reste bedeutet: Phenyl; $C_5$-$C_7$-Cycloalkyl; $C_1$-$C_{12}$-Alkylgruppen, deren C-Kette durch ein bis drei Sauerstoffatome in Etherfunktion

unterbrochen sein kann und die bis zu drei der folgenden Substituenten tragen können: Carboxy, $C_1$-$C_4$-Alkoxycarbonyl, Acryloyloxy, Methacryloyloxy, Hydroxy, Chlor oder Brom;

$R^2$ eine der vorgenannten Gruppen $R^1$ oder eine der vorgenannten Alkylgruppen oder substituierten Alkylgruppen $R^3$.

**3.** Polymethinfarbstoffe der allgemeinen Formel I nach Anspruch 1, in der die Variablen folgende Bedeutung haben:

A = B den Rest eines an den Heterocyclus anellierten Benzolkerns;

$Z^1$, $Z^2$ -S-; $-C(CH_3)_2-$ oder -CH = CH-;

D -CH = ; -CCl = ; -CBr = ; $-C(CH_3) =$ ; -CH = CH-CH = ;

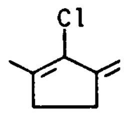 oder 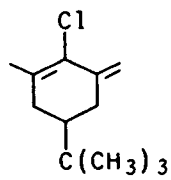 ;

$R^1$ eine der definitionsgemäßen Gruppen, wobei die Variablen folgende Bedeutung haben:

m 1 bis 10;

$R^3$ gleiche oder verschiedene der folgenden Reste: Phenyl; $C_1$-$C_6$-Alkylgruppen, deren C-Kette durch ein oder zwei Sauerstoffatome in Etherfunktion unterbrochen sein kann und die bis zu zwei der folgenden Substituenten tragen können: Carboxy, $C_1$-$C_4$-Alkoxycarbonyl, Hydroxy oder Brom;

$R^2$ eine der vorgenannten Gruppen $R^1$ oder eine der vorgenannten Alkylgruppen oder substituierten Alkylgruppen $R^3$.

**4.** Optische Aufzeichnungsmedien für die Aufzeichnung und Wiedergabe von Informationen mittels Laserstrahlen, enthaltend in der lichtempfindlichen Schicht einen Polymethinfarbstoff der Formel I gemäß den Ansprüchen 1 bis 3.

## Claims

**1.** A polymethine dye of the general formula I

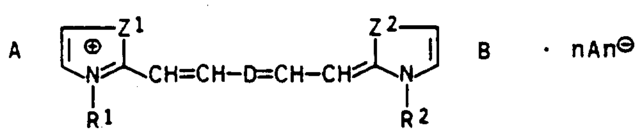 I

where the variables are each defined as follows:

A is the radical of a benzene or naphthalene nucleus which is fused to the heterocycle and which may carry up to three of the following substituents: $C_1$-$C_{12}$-alkyl, whose carbon chain may be interrupted by oxygen atoms in ether function, $C_1$-$C_{12}$-alkoxy, phenyl, phenoxy, phenylthio, cyano, amino, mono($C_1$-$C_{12}$-alkyl)amino,di($C_1$-$C_{12}$-alkyl)-amino, hydroxyl or halogen,

B has one of the meanings of A,

$Z^1$ and $Z^2$ are each -NH-, -O-, -S-, $-C(CH_3)_2-$ or -CH = CH-,

D is-$CX^2$ = ; -CH = $CX^2$-CH = ;

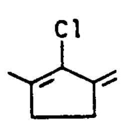 or 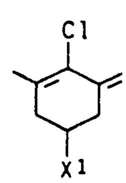

where $X^1$ is hydrogen or $C_1$-$C_6$-alkyl and $X^2$ is chlorine or bromine or has one of the meanings of $X^1$,

$R^1$ is a group

$-(CH_2)_m-Y^{\oplus}(R^3)_3$

where the variables are defined as follows:

m is from 1 to 10,

Y is nitrogen or phosphorus,

$R^3$, which may be identical or different in each appearance, is phenyl or $C_5$-$C_7$-cycloalkyl, which may each carry up to three of the following substituents: $C_1$-$C_4$-alkyl, $C_1$-$C_4$-alkoxy or halogen, or is $C_1$-$C_{22}$-alkyl, whose carbon chain may be interrupted by oxygen atoms in the ether function and which may carry up to three of the following substituents: carboxyl, $C_1$-$C_4$-alkanoyl, $C_1$-$C_4$-alkoxycarbonyl, $C_1$-$C_4$-alkanoylamino, $C_1$-$C_4$-alkoxycarbonylamino, acryloyloxy, methacryloyloxy, phenyl, amino, cyano, hydroxyl or halogen,

$R^2$ has one of the meanings of $R^1$ or is substituted or unsubstituted alkyl $R^3$ as defined,

$An^{\ominus}$ is one equivalent of an acid anion, and

n is 2 or, if $R^2$ is a radical $R^1$, 3.

**2.** A polymethine dye of the general formula I as claimed in claim 1, wherein the variables are defined as follows:

A is equal to B and each of these radicals may carry up to three of the following substituents: $C_1$-$C_6$-alkyl, phenyl, amino, chlorine and bromine,

$Z^1$ and $Z^2$ are each -NH-, -S-, $-C(CH_3)_2-$ or -CH=CH-,

$R^1$ is one of the groups defined, where

$R^3$, which may be identical or different in each appearance, is phenyl, $C_5$-$C_7$-cycloalkyl or $C_1$-$C_{12}$-alkyl whose carbon chain may be interrupted by from one to three oxygen atoms in ether function and which may carry up to three of the following substituents: carboxyl, $C_1$-$C_4$-alkoxycarbonyl, acryloyloxy, methacryloyloxy, hydroxyl, chlorine or bromine, and

$R^2$ is one of the aforementioned groups $R^1$ or one of the aforementioned substituted or unsubstituted alkyl groups $R^3$.

**3.** A polymethine dye of the general formula I as claimed in claim 1, wherein the variables are defined as follows:

A is equal to B, each being a benzene ring fused to the heterocycle,

$Z^1$ and $Z^2$ are each -S-, $-C(CH_3)_2-$ or -CH=CH-,

D is -CH=, -CCl=, -CBr=, $-C(CH_3)=$, -CH=CH-CH=,

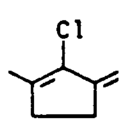 or 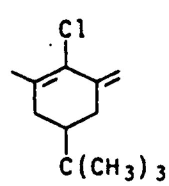 ;

$R^1$ is as defined, the variables being defined as follows: m is from 1 to 10,

$R^3$, which may be identical or different in each appearance, is phenyl or $C_1$-$C_6$-alkyl whose carbon chain may be interrupted by one or two oxygen atoms in ether function and which may carry up to two of the following substituents: carboxyl, $C_1$-$C_4$-alkoxycarbonyl, hydroxyl or bromine, and

$R^2$ is one of the aforementioned groups $R^1$ or one of the aforementioned substituted or unsubstituted alkyl groups $R^3$.

**4.** An optical recording medium for the recording and playing back of information by means of laser beams, containing a polymethine dye of the formula I as claimed in claim 1 or 2 or 3 in the light-sensitive layer.

**Revendications**

**1.** Colorants de polyméthine de formule générale I

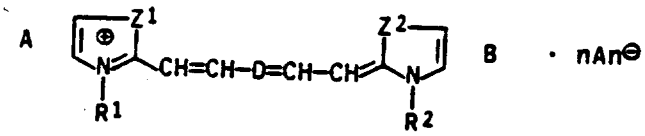

I

dans laquelle les variables ont la signification suivante :

A le reste d'un noyau benzénique ou naphtalénique condensé sur l'héterocycle, qui peut porter jusqu'à trois des substituants suivants: groupes alkyle en $C_1$-$C_{12}$, dont la chaîne carbonée peut être interrompue par des atomes d'oxygène en fonction éther, alcoxy en $C_1$-$C_{12}$, phényle, phénoxy, phénylthio, cyano, amino, mono(alkyle en $C_1$-$C_{12}$)amino, di-(alkyle en $C_1$-$C_{12}$)amino, hydroxy ou halogéno;

B l'un des restes A;

$Z^1$, $Z^2$ -NH-; -O-; -S-; $-C(CH_3)_2-$ ou -CH = CH-;

D $-CX^2=$ ; $-CH=CX^2-CH=$ ;

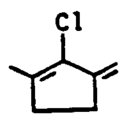

ou

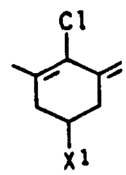

dans lesquelles $X^1$ représente un atome d'hydrogène ou un groupe alkyle en $C_1$-$C_6$ et $X^2$ représente un atome de chlore, de brome ou l'un des restes $X^1$; $R^1$ un groupe

$-(CH_2)_m-Y^{\oplus}(R^3)_3$

dans lequel les variables ont la signification suivante :

m 1 à 10;

Y azote ou phosphore;

$R^3$ des restes identiques ou différents parmi les suivants: groupes phényle ou cycloalkyle en $C_5$-$C_7$, qui peuvent porter chacun jusqu'à trois des substituants suivante : alkyle en $C_1$-$C_4$, alcoxy en $C_1$-$C_4$ ou halogéno; groupes alkyle en $C_1$-$C_{22}$, dont la chaîne carbonée peut être interrompue par des atomes d'oxygène en fonction éther et qui peuvent porter jusqu'à trois des substituants suivants : carboxy, alcanoyle en $C_1$-$C_4$, alcoxycarbonyle en $C_1$-$C_4$, alcanoylamino en $C_1$-$C_4$, alcoxycarbonylamino en $C_1$-$C_4$, acryloyloxy, méthacryloyloxy, phényle, amino, cyano, hydroxy ou halogéno;

$R^2$ l'un des restes $R^1$, ou l'un des groupes alkyle ou alkyle substitues définissant $R^3$;

$An^{\ominus}$ l'équivalent d'un anion d'acide;

n la valeur 2 ou, lorsque $R^2$ signifie l'un des restes $R^1$, la valeur 3.

**2.** Colorants de polyméthine de formule générale I selon la revendication 1, dans laquelle les variables ont la signification suivante:

A = B ses restes pouvant porter jusqu'à trois des substituants suivants : alkyle en $C_1$-$C_6$, phényle, amino, chloro ou bromo;

$Z^1$, $Z^2$ -NH-; -S-; $-C(CH_3)_2-$ ou -CH = CH-;

$R^1$ l'un des groupes conformes à la définition,

$R^3$ étant mis pour des restes identiques ou différents parmi les suivants : phényle; cycloalkyle en $C_5$-$C_7$; groupes alkyle en $C_1$-$C_{12}$, dont la chaîne carbonée peut être interrompue par un à trois atomes d'oxygène en fonction éther et qui peuvent porter jusqu'à trois des substituants suivants : carboxy, alcoxycarbonyle en $C_1$-$C_4$, acryloyloxy, méthacryloyloxy,

hydroxy, chloro ou bromo;

$R^2$ l'un des groupes $R^1$ précités ou l'un des groupes alkyle ou alkyle substitués $R^3$ précités.

**3.** Colorants de polyméthine de formule générale I selon la revendication 1, dans laquelle les variables ont la signification suivante:

A = B le reste d'un noyau benzénique condensé sur l'hétherocycle;

$Z^1$, $Z^2$ -S-; $-C(CH_3)_2-$ ou -CH = CH-;

D -CH = ; -CCl = ; -CBr = ; $-C(CH_3) =$ ; -CH = CH-CH = ;

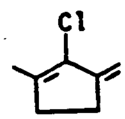

ou

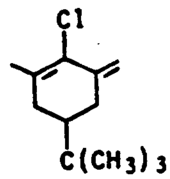

;

$R^1$ l'un des groupes conformes à la définition, les variables ayant la signification suivante :

m 1 à 10;

$R^3$ restes identiques ou différents parmi les suivants : phényle; groupes alkyle en $C_1$-$C_6$, dont la chaîne carbonée peut être interrompue par un ou deux atomes d'oxygène en fonction éther et qui peuvent porter jusqu'à deux des substituants suivants : carboxy, alcoxycarbonyle en $C_1$-$C_4$, hydroxy au bromo;

$R^2$ l'un des groupes $R^1$ précités ou l'un des groupes alkyle ou alkyle substitués $R^3$ précités.

**4.** Milieux d'enregistrement optique pour l'enregistrement et la reproduction d'informations au moyen de rayons laser, contenant, dans la couche sensible à la lumière, un colorant de polyméthine de formule I selon l'une quelconque des revendications 1 à 3.